# EUROPEAN PATENT SPECIFICATION

(11) **EP 3 698 247 B1**
(45) Date of publication and mention of the grant of the patent: **07.08.2024**
(21) Application number: 18799951.1
(22) Date of filing: 18.10.2018
(51) Int. Cl.: G06F 9/50

(54) **AN APPARATUS AND METHOD FOR PROVIDING A PERFORMANCE BASED PACKET SCHEDULER**
VORRICHTUNG UND VERFAHREN ZUR BEREITSTELLUNG EINES LEISTUNGSBASIERTEN PAKET-SCHEDULERS
APPAREIL ET PROCÉDÉ DE FOURNITURE D'ORDONNANCEUR DE PAQUETS BASÉ SUR LA PERFORMANCE

(30) Priority: 18.10.2017 US 201715786657
(43) Date of publication of application: 26.08.2020
(73) Proprietor: Cisco Technology, Inc., San Jose, CA 95134 (US)
(72) Inventor: MURUGESAN, Prasannakumar, San Jose CA 95134 (US); GILL, Ajeet, Pal Singh, San Jose CA 95134 (US); DODD-NOBLE, Aeneas, Sean, San Jose CA 95134 (US); JOHNSON, David, A., San Jose CA 95134 (US); CAMPBELL, Ian, Mcdowell, San Jose CA 95134 (US); BIRAJDAR, Tejas, San Jose CA 95134 (US)
(74) Representative: Jarrett, Daniel Phillip
(86) International application number: PCT/US2018/056435
(87) International publication number: WO 2019/079545

(56) References cited:
- WO-A1-2010/138658
- WO-A1-2014/055028
- US-A1- 2008 271 030
- US-A1- 2017 177 221

## Description

### TECHNICAL FIELD

The present disclosure relates to packet flow and particularly to a key performance indicator based scheduler that enables a dynamic matching of work items to cores in a given user plane, such as a container or virtual machine.

### BACKGROUND

In the 5G Next Generation Mobile Core, the user plane (UP) needs to have low latency and very high throughput. The user plane also needs to efficiently use CPU (central processing unit) resources based on the workload, be it DPI (deep packet inspection), TCP (transmission control protocol) optimizations, and so forth. Current packet forwarders in a Network Function Virtualization architecture, like OVS-DPDK (Open vSwitch Data Plane Development Kit) or VPP (vector data processing), have a static binding of cores to work items. User space packet scheduling within a container or virtual machine is contained within a process boundary and cannot therefore dynamically allocate more CPU resources to processes within the container or virtual machine.

Forwarders in the NFVI (network function virtualization infrastructure) like VPP and OVS-DPDK do not have a scalable packet scheduler and throughputs are limited by static assignment of cores to certain ports. Even L2-L3 or L4-L7 processing work items are statically bound to certain cores. The result of this static binding is an uneven load distribution across CPU resources. Accordingly, statically allocating CPU resources can result in a waste of CPU resources.

US2008271030A1 describes a method for managing workload in a computing system comprises performing automated workload management arbitration for a plurality of workloads executing on the computing system, and initiating the automated workload management arbitration from a process scheduler in a kernel.

US2017177221A1 describes methods and systems for allocating resources based on dynamic core allocation in a scheduler hierarchy of a storage system. One method includes reserving a set of core processors including one or more core processors for execution of system IOs in the data storage system. The data storage system includes a controller including non-volatile memory (NVRAM) for handling IOs and a first central processing unit (CPU) having a plurality of core processors, a solid state memory (SSD) configured as a read cache memory, and permanent data storage. The method includes dynamically adjusting the number of core processors in the set based on a current utilization of a resource. The method includes scheduling an IO on a first core processor of the plurality of core processors that has the least magnitude of scheduled utilization.

WO2014055028A1 describes a method, node and computer program for a resource controller node for enabling automatic adaptation of the size of a pool of resource units, the resource units needed for operation of an application in a computer environment. The method comprises requesting a predicted capacity demand by a resource controller unit from a prediction unit, retrieving a configuration for calculation of the predicted capacity demand from a workload characterization unit by the prediction unit as a response to the request, retrieving at least one key performance indicator based on workload metric data from a monitor unit by the prediction unit as a response to the request, calculating a capacity difference of compute units based on the at least one key performance indicator and the configuration by the prediction unit, the capacity difference defined by a difference of compute units between a current capacity allocation and a predicted capacity demand, translating the difference of compute units to a difference of resource units by a resource adapter unit, transmitting a size adaptation instruction comprising the difference of resource units to the pool of resource units, instructing the pool of resource units to adapt its size of the pool of resource units according to the difference of resource units, thereby enabling automatic adaptation of the pool of resource units to meet an actual workload and a predicted capacity demand of the application.

WO2010138658A1 describes systems and methods improve the equitable distribution the processing capacity of a computing device processing work items retrieved from multiple queues in a workflow system. A retrieval priority is determined for each of the plurality of queues and work items are retrieved from each of the multiple queues according to the retrieval priority. The retrieved work items are then stored in a central data structure. Multiple processing components process the work items stored in the central data structure. The number of processing components is selectively adjusted to maximize efficiency.

### BRIEF DESCRIPTION OF THE DRAWINGS

In order to describe the manner in which the above-recited and other advantages and features of the disclosure can be obtained, a more particular description of the principles briefly described above will be rendered by reference to specific embodiments thereof which are illustrated in the appended drawings. Understanding that these drawings depict only exemplary embodiments of the disclosure and are not therefore to be considered to be limiting of its scope, the principles herein are described and explained with additional specificity and detail through the use of the accompanying drawings in which:
FIG. 1 illustrates an example system configuration;
FIG. 2 illustrates an example concept of a scheduler that is provided as part of a user plane to enable dynamic binding of cores to work items;
FIG. 3 illustrates a method embodiment; and
FIG. 4 illustrates another method embodiment.

### DESCRIPTION OF EXAMPLE EMBODIMENTS

Various embodiments of the disclosure are discussed in detail below. While specific implementations are discussed, it should be understood that this is done for illustration purposes only. A person skilled in the relevant art will recognize that other components and configurations may be used without parting from the scope of the disclosure.

### Overview

Additional features and advantages of the disclosure will be set forth in the description which follows, and in part will be obvious from the description, or can be learned by practice of the herein disclosed principles. The features and advantages of the disclosure can be realized and obtained by means of the instruments and combinations particularly pointed out in the appended claims. These and other features of the disclosure will become more fully apparent from the following description and appended claims, or can be learned by the practice of the principles set forth herein.

Disclosed is a method that includes periodically observing packets in a user plane according to at least one key performance indicator in a configuration file to yield an observation, wherein the observation represents a closed-loop demand of resources within the user plane. The method includes adjusting, via a scheduler in the user plane and based on the observation, a binding of cores to work items. The binding between cores and work items is dynamic and changeable to improve performance. The at least one key performance indicator can include one or more of a CPU utilization, latency and packet drops. The workload allocations can include work items that are individual schedulable functions that operation on a queue of packets within the user plane.

In another example, a method is disclosed for providing a dynamic binding of cores to work items within a user plane. The method includes assigning a first number of cores for a first work item within the user plane, assigning a second number of cores to a second work item within the user plan and periodically observing packets in the user plane according to at least one key performance indicator in a configuration file to yield an observation, wherein the observation represents a closed-loop demand of resources within the user plane. The method also includes adjusting, via a scheduler in the user plane and based on the observation, a binding of cores to work items by assigning a third number of cores to the first work item within the user plane and assigning a fourth number of cores to the second work item within the user plane.

### Detailed Description

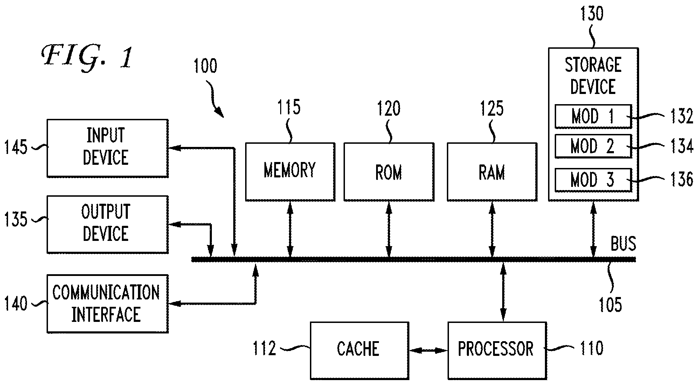

The present disclosure addresses the issues raised above. The disclosure provides a system, method and computer-readable storage device embodiments. First a general example system shall be disclosed in FIG. 1 which can provide some basic hardware components making up a server, node or other computer system.

First a general example system shall be disclosed in FIG. 1, which can provide some basic hardware components making up a server, node or other computer system. FIG. 1 illustrates a computing system architecture 100 wherein the components of the system are in electrical communication with each other using a connector 105. Exemplary system 100 includes a processing unit (CPU or processor) 110 and a system connector 105 that couples various system components including the system memory 115, such as read only memory (ROM) 120 and random access memory (RAM) 125, to the processor 110. The system 100 can include a cache of high-speed memory connected directly with, in close proximity to, or integrated as part of the processor 110. The system 100 can copy data from the memory 115 and/or the storage device 130 to the cache 112 for quick access by the processor 110. In this way, the cache can provide a performance boost that avoids processor 110 delays while waiting for data. These and other modules/services can control or be configured to control the processor 110 to perform various actions. Other system memory 115 may be available for use as well. The memory 115 can include multiple different types of memory with different performance characteristics. The processor 110 can include any general purpose processor and a hardware module or software module/service, such as service 1 132, service 2 134, and service 3 136 stored in storage device 130, configured to control the processor 110 as well as a special-purpose processor where software instructions are incorporated into the actual processor design. The processor 110 may essentially be a completely self-contained computing system, containing multiple cores or processors, a bus (connector), memory controller, cache, etc. A multi-core processor may be symmetric or asymmetric.

To enable user interaction with the computing device 100, an input device 145 can represent any number of input mechanisms, such as a microphone for speech, a touch-sensitive screen for gesture or graphical input, keyboard, mouse, motion input, speech and so forth. An output device 135 can also be one or more of a number of output mechanisms known to those of skill in the art. In some instances, multimodal systems can enable a user to provide multiple types of input to communicate with the computing device 100. The communications interface 140 can generally govern and manage the user input and system output. There is no restriction on operating on any particular hardware arrangement and therefore the basic features here may easily be substituted for improved hardware or firmware arrangements as they are developed.

Storage device 130 is a non-volatile memory and can be a hard disk or other types of computer readable media which can store data that are accessible by a computer, such as magnetic cassettes, flash memory cards, solid state memory devices, digital versatile disks, cartridges, random access memories (RAMs) 125, read only memory (ROM) 120, and hybrids thereof.

The storage device 130 can include software services 132, 134, 136 for controlling the processor 110. Other hardware or software modules/services are contemplated. The storage device 130 can be connected to the system connector 105. In one aspect, a hardware module that performs a particular function can include the software component stored in a computer-readable medium in connection with the necessary hardware components, such as the processor 110, connector 105, display 135, and so forth, to carry out the function.

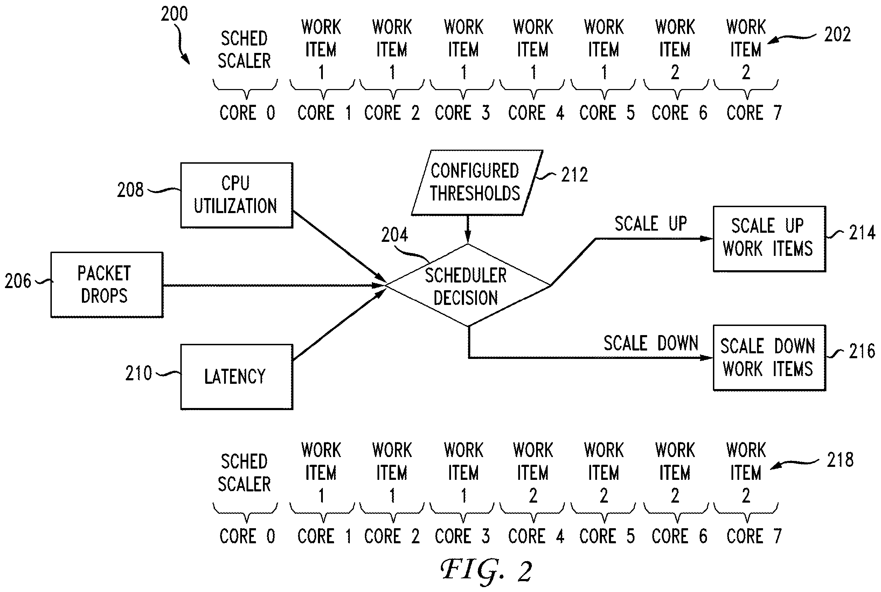

FIG. 2 illustrates an example configuration 200, which provides a packet scheduler for a forwarder running within a virtual machine or container in the user plane of, for example, the 5G next generation mobile core. The goal of 5G is to provide for higher density of mobile broadband users, support device to device communication and be ultra-reliable. Other goals include data rates of tens of megabits per second for tens of thousands of users, data rates of 100 Mb per second for metropolitan areas, 1Gb per second simultaneously to workers on a same office floor, several hundreds of thousands of simultaneous connections for wireless sensors, spectral efficiency which is enhanced when compared to 4G networks, coverage improvement, signaling efficiency enhancements and reduce latency compared to the LTE standard. In one aspect, the present disclosure relates to a packet scheduler for a forwarder that runs within any virtual machine or container in any user plane and is not restricted to the 5G next generation mobile core.

A set of 8 cores is shown as feature 202 in FIG. 2. Core 0 is shown as running the scheduler and cores 1 - 5 are processing work item 1. Cores 6 and 7 process work item 2. Feature 202 can represent a state of the virtual machine or container in the user plane at a first time in which work item 1 is assigned or bound to a set of cores and work item 2 is assigned or bound to a set of cores. The concepts disclosed herein identify an approach which enables a dynamic binding between cores and work items. Work items are defined as individually schedulable functions that operate on a queue of packets. Work items can run within a single process or across multiple processes in a given user plane, i.e., a container or a virtual machine. The scheduler 204 will access a configuration file 212 that includes data associated with a number of key performance indicators. For example, key performance indicators can include one or more of CPU utilization 208, packet drops 206, latency information, 210 as well as other performance information which might be available. Each key performance indicator can include a threshold value within the configuration file 212. These threshold values can individually be set manually by an administrator or can be set based on feedback from the system or the network. For example, feedback can be provided regarding performance within the virtual machine or container itself, independent of other virtual entities, or a combination of the performance within the virtual machine or container as well as other virtual machines or containers. The scheduler 204 can utilize any one or more pieces of data in the configuration file 212 in any combination.

The scheduler 204 periodically monitors the key performance indicators at fixed or dynamic intervals, such as every 1 second, and decides at a certain time whether to scale up 214 or to scale down 216 work items according to the data in the configuration file 212. The interval of observation is configurable, as well as when, based on a set of observations, a decision is made to either scale up or scale down work items. The intervals can also be dynamic or static. In an embodiment which falls outside the scope of the invention, the interval is static. For example, the system could set an interval of observations every second and make a decision every 5 observations or every 5 seconds. The observations may occur at a shorter interval given data associated with the workload such as high CPU usage during a period of time or a scheduled increase in CPU usage. Feedback based on data within the user plane and/or external to the user plane could also be utilized to dynamically set intervals of observation as well as decisions intervals on whether to scale up or scale down work items. In one aspect, adjusting workload allocations and/or resources within a physical or a virtualized forwarding node can be based on a closed loop demand of resources. In other words, the closed loop demand for resources involves the demand for resources within the particular user plane environment, whether physical or virtualized.

FIG. 2 illustrates an example of an initial binding between cores and work items 202 at a first time and after a scheduler decision 204 is made based on the observations and data in the configuration file 212, at a second time, which can be later than the first time. Note that the binding 218 has changed at the second time. Work item 1 now is assigned or bound to cores 1-3 and has thus been scaled down. Work item 2 has been scaled up from only two cores at the first time 202 to cores 4 - 7 at the second time 218. FIG. 2 of course illustrates a non-limiting example of how the binding of workload to cores can be adjusted.

In another aspect of this disclosure, the decision-making process in which results can be no change to bindings between cores and work items, a scaling up of work items or a scaling down of work items can further factor in application type to determine resources that work items could scale to. For example, assume in FIG. 2 that there are several different types of cores and that cores 2 and 3 are type 1 and cores 4 and 5 are type 2. In some cases, applications that generate the packets that flow to respective cores will have an affinity for a particular type of resource such as a particular type of core. In this scenario, the scheduler 204 can include the information about the application type such that the scheduling decision 204 will not only involve a scale up 214 or a scaled-down 216 decision but also assign work items associated with an application to particular cores to improve efficiency or to match the application type with a resource type based on a likelihood of an affinity of that application for a particular resource type. By matching application type with resources, the system can improve performance and avoid mismatches between work items and resources such as cores. The application type can also impact the dynamic adjustments between the binding of cores to work items when the cores are all of a similar type. In some cases, an application type might simply require or may be predicted to require more resources and thus additional cores (or any other compute resource) may be bound to work items based on that application type.

The scheduler 204, in one aspect, can be considered self contained within the user plane, container or virtual machine. This can mean that the scheduler 204 does not require communication with an external system such as a north-bound orchestration system for a reallocation of work items with cores. In another aspect, the scheduler 204 could incorporate data from a north - bound orchestration system in its reallocation decisions. Furthermore, in another aspect, the number of cores available to the user plane, container or virtual machine could expand to include additional resources based on the analysis of the key performance indicators and the configuration threshold.

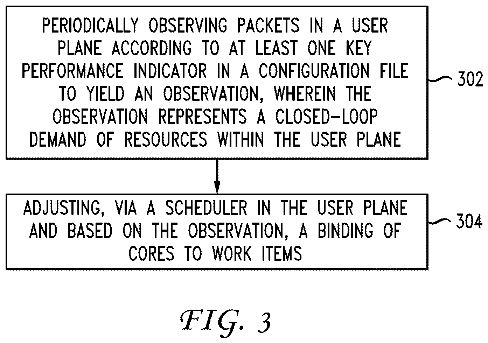

FIG. 3 illustrates a method embodiment. A method includes periodically observing packets in a user plane according to at least one key performance indicator in a configuration file to yield an observation, wherein the observation represents a closed-loop demand of resources within the user plane (302). The user plane can be a 5G user plane appliance, a virtual machine or a container. The method includes adjusting, via a scheduler in the user plane and based on the observation, a binding of cores to work items (304). There is at least one key performance indicator which can include one or more of a CPU utilization, latency and packet drops. The key performance indicator can be any other data that represents performance of a resource or potential or predicated resource usage characteristics, such as data related to memory utilization, workload characteristics, predictive or expected performance associated with one or more of latency, CPU utilization, memory utilization and so forth. The workload allocations include work items that are individually schedulable functions that operate on a queue of packets within the user plane.

The periodicity of monitoring the indicators can also be static, variable, or triggered based on some event. In an embodiment which falls outside the scope of the invention, the periodicity of monitoring is static. For example, if a large amount of workload is to be scheduled for using the compute environment, the monitoring of the indicators is increased in frequency, and thus increased in accuracy, for making scaling up or scaling down decisions. A spike in an observation of one of the data points could also trigger a scaling of work items. Further, the system could schedule a monitoring frequency or level of observation in advance of an expected throttling of any given resource or resource group.

In one aspect, adjusting workload allocations includes one or more of: scaling up work items such that additional cores are bound to the work items or scaling down the work items such that cores are unbound to the work items. In this scenario, one set of work items could be scaled up, while another set of work items could be scaled down. Adjusting workload allocations includes adjusting how many cores are assigned to a respective work item within the user plane. The adjusting can also occur at a scheduled number of observations which can be static or dynamic in terms of timing. While cores are referenced, the adjustment can also relate to any other type of compute resource such as memory, bandwidth, and so forth.

The observation can further include an application type, wherein adjusting of the binding of cores to work items is performed based at least in part on application type. The adjusting of the binding of cores in this respect can involve assigning work items associated with a particular application type to a particular core or resource within the user plane. The configuration file can include one or more of a first threshold associated with CPU utilization, a second threshold associated with latency, a third threshold associated with packet drops and an application type. The threshold for any individual data type in the configuration file can be statically set or can be dynamic based on feedback information from the user plane and/or from outside the user plane. An administrator can also set the threshold for any data type.

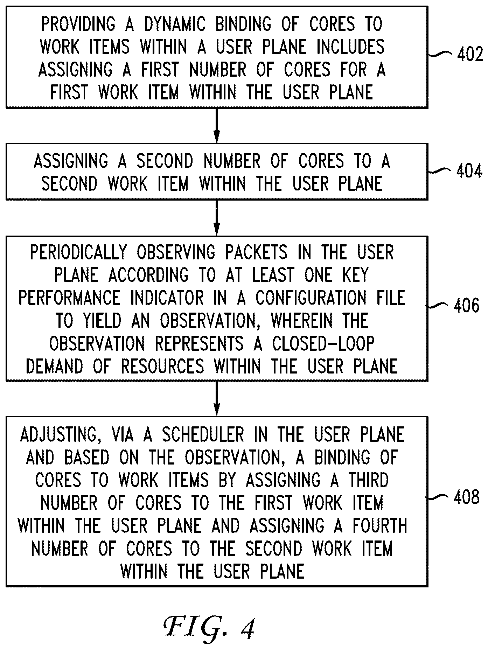

FIG. 4 illustrates another method embodiment. A method is disclosed for providing a dynamic binding of cores to work items within a user plane and includes assigning a first number of cores for a first work item within the user plane (402), assigning a second number of cores to a second work item within the user plane (404) and periodically observing packets in the user plane according to at least one key performance indicator in a configuration file to yield an observation, wherein the observation represents a closed-loop demand of resources within the user plane (406). In another aspect, the observation could include not only an analysis of the performance indicators as described above, but could also include an analysis or evaluation of the application type or workload characteristics. In this scenario, it is noted that some workloads or application types might have an affinity or be programmed for a certain type of operating system, hardware, virtual machine or other compute resource that will be used to run the application. The method also includes adjusting, via a scheduler in the user plane and based on the observation, a binding of cores to work items by assigning a third number of cores to the first work item within the user plane and assigning a fourth number of cores to the second work item within the user plane (408).

In the extended scenario, the observation upon which the adjusting is based includes not only data about the key indicators but also data about the application type or workload characteristics. Thus, the adjusting that is performed by the scheduler can take into account the indicators and/or the application type/workload characteristics and assign cores to work items accordingly. In some cases, core characteristics might match a certain application type or workload characteristic than other application types or workload characteristics. In one aspect as well, an application or a workload can broadcast its affinities to the scheduler in advance and adjustments to the scheduler algorithm can occur to further refine and improve the assignment of cores to work items. Further, an application or workload could transmit characteristics of individual work items associated with the workload or application to the scheduler, such as data associated with work items that are network intensive, database intensive, or CPU intensive, for example. This data could then be used to adjust the assignment algorithm for again further refinement of the assignment process.

The first work item and the second work item each include an individually schedulable function that operates on a queue of packets. The observation can further include an application type, wherein cores of the third number of cores and cores of the fourth number of cores are chosen based at least in part on the application type. The scheduler in the user plane can operate independently or at least in part in coordination with a north-bound orchestration system.

In some embodiments the computer-readable storage devices, mediums, and/or memories can include a cable or wireless signal containing a bit stream and the like. However, when mentioned, non-transitory computer-readable storage media expressly exclude media such as energy, carrier signals, electromagnetic waves, and signals per se.

Methods according to the above-described examples can be implemented using computer-executable instructions that are stored or otherwise available from computer readable media. Such instructions can include, for example, instructions and data which cause or otherwise configure a general purpose computer, special purpose computer, or special purpose processing device to perform a certain function or group of functions. Portions of computer resources used can be accessible over a network. The computer executable instructions may be, for example, binaries, intermediate format instructions such as assembly language, firmware, or source code. Examples of computer-readable media that may be used to store instructions, information used, and/or information created during methods according to described examples include magnetic or optical disks, flash memory, USB devices provided with non-volatile memory, networked storage devices, and so on.

Devices implementing methods according to these disclosures can include hardware, firmware and/or software, and can take any of a variety of form factors. Typical examples of such form factors include laptops, smart phones, small form factor personal computers, personal digital assistants, rackmount devices, standalone devices, and so on. Functionality described herein also can be embodied in peripherals or add-in cards. Such functionality can also be implemented on a circuit board among different chips or different processes executing in a single device, by way of further example.

The instructions, media for conveying such instructions, computing resources for executing them, and other structures for supporting such computing resources are means for providing the functions described in these disclosures.

Although a variety of examples and other information was used to explain aspects within the scope of the appended claims, no limitation of the claims should be implied based on particular features or arrangements in such examples, as one of ordinary skill would be able to use these examples to derive a wide variety of implementations. Further and although some subject matter may have been described in language specific to examples of structural features and/or method steps, it is to be understood that the subject matter defined in the appended claims is not necessarily limited to these described features or acts. For example, such functionality can be distributed differently or performed in components other than those identified herein. Rather, the described features and steps are disclosed as examples of components of systems and methods within the scope of the appended claims. Moreover, claim language reciting "at least one of" a set indicates that one member of the set or multiple members of the set satisfy the claim.

It should be understood that features or configurations herein with reference to one embodiment or example can be implemented in, or combined with, other embodiments or examples herein. That is, terms such as "embodiment", "variation", "aspect", "example", "configuration", "implementation", "case", and any other terms which may connote an embodiment, as used herein to describe specific features or configurations, are not intended to limit any of the associated features or configurations to a specific or separate embodiment or embodiments, and should not be interpreted to suggest that such features or configurations cannot be combined with features or configurations described with reference to other embodiments, variations, aspects, examples, configurations, implementations, cases, and so forth. In other words, features described herein with reference to a specific example (e.g., embodiment, variation, aspect, configuration, implementation, case, etc.) can be combined with features described with reference to another example. Precisely, one of ordinary skill in the art will readily recognize that the various embodiments or examples described herein, and their associated features, can be combined with each other.

A phrase such as an "aspect" does not imply that such aspect is essential to the subject technology or that such aspect applies to all configurations of the subject technology. A disclosure relating to an aspect may apply to all configurations, or one or more configurations. A phrase such as an aspect may refer to one or more aspects and vice versa. A phrase such as a "configuration" does not imply that such configuration is essential to the subject technology or that such configuration applies to all configurations of the subject technology. A disclosure relating to a configuration may apply to all configurations, or one or more configurations. A phrase such as a configuration may refer to one or more configurations and vice versa. The word "exemplary" is used herein to mean "serving as an example or illustration." Any aspect or design described herein as "exemplary" is not necessarily to be construed as preferred or advantageous over other aspects or designs.

Moreover, claim language reciting "at least one of" a set indicates that one member of the set or multiple members of the set satisfy the claim. For example, claim language reciting "at least one of A, B, and C" or "at least one of A, B, or C" means A alone, B alone, C alone, A and B together, A and C together, B and C together, or A, B and C together.

## Claims

1. A method comprising:
periodically observing packets in a user plane according to at least one key performance indicator in a configuration file to yield an observation, wherein the observation represents a closed-loop demand of resources within the user plane; and
adjusting, via a scheduler in the user plane and based on the observation, a binding of cores to work items,
wherein a frequency at which the at least one key performance indicator is monitored is according to an amount of workload to be scheduled for using a compute environment,
and wherein the work items are individually schedulable functions that operate on a queue of packets.

2. The method of claim 1, wherein the user plane comprises one of a virtual machine and a container.

3. The method of any preceding claim, wherein the at least one key performance indicator comprises one of a central processing unit - CPU - utilization, latency and packet drops.

4. The method of any preceding claim, wherein the observation further comprises an application type, wherein adjusting of the binding of cores to work items is performed based at least in part on the application type.

5. The method of any preceding claim, wherein the configuration file comprises one or more of a first threshold associated with central processing unit - CPU - utilization, a second threshold associated with latency, a third threshold associated with packet drops and an application type.

6. An apparatus comprising a processor configured to perform the method of any preceding claim.

7. A computer-readable medium comprising instructions which, when executed by a processor, cause the processor to perform the method of any of claims 1 to 5.

## Patentansprüche

1. Ein Verfahren aufweisend:
periodisches Beobachten von Paketen in einer Benutzerebene gemäß mindestens einem Leistungsindikator in einer Konfigurationsdatei, um eine Beobachtung zu ergeben, wobei die Beobachtung eine Closed-Loop-Nachfrage von Ressourcen innerhalb der Benutzerebene darstellt; und
anpassen, über einen Scheduler in der Benutzerebene und basierend auf der Beobachtung, einer Zuordnung von Kernen zu Arbeitselementen,
wobei eine Frequenz, mit der der mindestens eine Leistungsindikator überwacht wird, gemäß einer Menge an Arbeitslast ist, die für die Nutzung einer Computerumgebung geplant ist,
und wobei die Arbeitselemente einzeln planbare Funktionen sind, die auf einer Warteschlange von Paketen arbeiten.

2. Das Verfahren nach Anspruch 1, wobei die Benutzerebene eine virtuelle Maschine und einen Container aufweist.

3. Das Verfahren nach einem der vorhergehenden Ansprüche, wobei der mindestens eine Leistungsindikator eine Auslastung der zentralen Verarbeitungseinheit -CPU-, eine Latenz und Paketverluste, aufweist.

4. Das Verfahren nach einem der vorhergehenden Ansprüche, wobei die Beobachtung weiterhin einen Anwendungstyp aufweist, wobei die Anpassung der Zuordnung von Kernen zu Arbeitselementen zumindest teilweise basierend auf dem Anwendungstyp durchgeführt wird.

5. Das Verfahren nach einem der vorhergehenden Ansprüche, wobei die Konfigurationsdatei eine oder mehrere erste Schwellen, die mit der Auslastung der zentralen Verarbeitungseinheit -CPU- verbunden sind, zweite Schwellen, die mit der Latenz verbunden sind, dritte Schwellen, die mit Paketverlusten verbunden sind, und einen Anwendungstyp aufweist.

6. Eine Vorrichtung umfassend einen Prozessor, der konfiguriert ist, das Verfahren nach einem der vorhergehenden Ansprüche auszuführen.

7. Ein computerlesbares Medium, Anweisungen aufweisend, die, wenn sie von einem Prozessor ausgeführt werden, den Prozessor veranlassen, das Verfahren nach einem der Ansprüche 1 bis 5 auszuführen.

## Revendications

1. Procédé comprenant le fait :
d'observer périodiquement des paquets dans un plan utilisateur selon au moins un indicateur de performance clé dans un fichier de configuration afin de produire une observation, procédé dans lequel l'observation représente une demande - en boucle fermée - de ressources dans le plan utilisateur ; et
d'ajuster, via un planificateur dans le plan utilisateur et en se basant sur l'observation, une liaison de coeurs à des éléments de travail,
procédé dans lequel une fréquence, à laquelle l'au moins un indicateur de performance clé est surveillé, est selon une quantité de charge de travail devant être planifiée pour utiliser un environnement de calcul,
et procédé dans lequel les éléments de travail sont des fonctions planifiables individuellement qui agissent sur une file d'attente de paquets.

2. Procédé selon la revendication 1, dans lequel le plan utilisateur comprend l'un ou l'une d'une machine virtuelle et d'un conteneur.

3. Procédé selon l'une des revendications précédentes, dans lequel l'au moins un indicateur de performance clé comprend l'une d'une utilisation de l'unité centrale de traitement - CPU -, l'une d'une latence et l'une de celles parmi des pertes de paquets.

4. Procédé selon l'une quelconque des revendications précédentes, dans lequel l'observation comprend en outre un type d'application, procédé dans lequel l'ajustement de la liaison de coeurs à des éléments de travail est mis en œuvre, en se basant au moins en partie sur le type d'application.

5. Procédé selon l'une quelconque des revendications précédentes, dans lequel le fichier de configuration comprend un ou plusieurs de ceux parmi un premier seuil associé à l'utilisation de l'unité centrale de traitement - CPU -, un deuxième seuil associé à la latence, un troisième seuil associé à des pertes de paquets et à un type d'application.

6. Appareil comprenant un processeur configuré pour mettre en oeuvre le procédé selon l'une quelconque des revendications précédentes.

7. Support lisible par ordinateur, ledit support comprenant des instructions qui, lorsqu'elles sont exécutées par un processeur, amènent le processeur à mettre en oeuvre le procédé selon l'une quelconque des revendications 1 à 5.
